(19) **Europäisches Patentamt**
**European Patent Office**
**Office européen des brevets**

(11) **EP 2 138 380 B1**

(12) **EUROPÄISCHE PATENTSCHRIFT**

(45) Veröffentlichungstag und Bekanntmachung des Hinweises auf die Patenterteilung:
**19.10.2011 Patentblatt 2011/42**

(51) Int Cl.:
*B62D 15/02* *(2006.01)*    *B60W 30/12* *(2006.01)*

(21) Anmeldenummer: **08105786.1**

(22) Anmeldetag: **13.11.2008**

(54) **Vorrichtung und Verfahren zum Betrieb eines Lenkassistenzsystems mit Fahrereingriffstoleranz**

Device and method for operating a steering assist system with driver intervention tolerance

Dispositif et procédé destinés au fonctionnement d'un système de direction assistée ayant une tolérance d'intervention du conducteur

(84) Benannte Vertragsstaaten:
**DE FR GB SE**

(30) Priorität: **26.06.2008 DE 102008002669**

(43) Veröffentlichungstag der Anmeldung:
**30.12.2009 Patentblatt 2009/53**

(73) Patentinhaber: **Robert Bosch GmbH**
**70442 Stuttgart (DE)**

(72) Erfinder:
• **Buerkle, Lutz**
**71229 Leonberg (DE)**
• **Rentschler, Tobias**
**75180 Pforzheim (DE)**
• **App, Thomas**
**75059 Zaisenhausen (DE)**

(56) Entgegenhaltungen:
EP-A- 1 350 707        WO-A-2007/142345
DE-A1-102005 049 071   DE-A1-102005 057 251
DE-A1-102006 058 412   US-A1- 2007 203 617

**Beschreibung**

Stand der Technik

Die Erfindung geht aus von einer Vorrichtung oder Verfahren nach Gattung der unabhängigen Ansprüche. In der DE 10 2004 055 064 A1 wird ein Lenkassistenzsystem, auch Lane Keeping Support System (LKS) genannt, beschrieben, welches zum autonomen Steuern eines Fahrzeugs dient. Mittels Umfelderkennungssysteme ermittelt das System die optimale Soll-Trajektorie und führt einen entsprechenden Querlenkungseingriff durch, falls die Ist-Trajektorie davon abweicht. Aus regelungstechnischer Sicht stellt der Lenkeingriff des Fahrers eine Störung des Systems dar, gegen den das System gegenregeln würde, sofern nicht eine besondere Behandlung stattfindet. Für den Fahrer würde sich in diesem Fall ein unangenehmes Lenkgefühl ergeben, da er an der Lenkung die Stellkräfte des Systems überwinden muss. Da die Stellkräfte situationsabhängig unterschiedlich sein können, ist die Gegenkraft, die der Fahrer aufbringen muss, situationsabhängig unterschiedlich stark, was die Unannehmlichkeit eher noch verstärkt.

Die DE 10 2005 049 071 A1 zeigt ein LKS-System mit dem Ziel ein Fahrzeug wesentlich genauer auf einer gewünschten Bewegungsbahn in einer Fahrspur zu halten. Dies wird durch ein Regler bewerkstelligt, der die Querablage des Fahrzeugs regel. Weiterhin lehrt die Schrift das Reglerausgangssignal zum Zeitpunkt eines Fahrerlenkeingriffs einzufrieren und am Endes des Fahrerlenkeingriffs wieder auf einen normalen Wert zu setzen. Die Lenkaktivität des Fahrers wird dadurch erkannt, dass das vom Fahrer ausgeübte Lenkradmoment gemessen wird, wobei das Lenkradmoment lediglich zu dieser Erkennung dient und im erfindungsgemäßen Regler ansonsten nicht weiter auftaucht.

Weiterhin ist bekannt, Fahrerassistenzsysteme im einfachsten Fall zu deaktivieren, wenn der Fahrer einen Eingriff vornimmt. Vergleichbar mit einem Tempomat, der deaktiviert wird, wenn der Fahrer die Bremse betätigt, so kann ein LKS-System derart ausgebildet sein, dass ein Lenkeingriff zur Deaktivierung des Systems führt. Dies gegebenenfalls auch nur temporär bis zur Beendigung des Fahrereingriffs. Wird nun die unterstützende Lenkkraft des LKS-Systems im Moment des Fahrereingriffs einfach deaktiviert, so muss der Fahrer plötzlich die gesamte Lenkkraft übernehmen, was ein unangenehmes Lenkgefühl verursacht.

Offenbarung der Erfindung

Das erfindungsgemäße Verfahren bzw. Vorrichtung mit den Merkmalen der unabhängigen Ansprüche haben demgegenüber den Vorteil, dass dem Fahrer ein angenehmes Lenkgefühl zuteil wird. Dies wird dadurch erreicht, dass ein Regelsystem, wie es z. B. im Stand der Technik beschrieben ist, nicht deaktiviert wird, beispielsweise indem der Rückkopplungszweig unterbrochen wird, sondern die Parameter des Regelsystems im Falle des Fahrereingriffs derart angepasst werden, dass sich das System so verhält, dass es sich für den Fahrer angenehm anfühlt. In der Erfindung werden die Methoden und Eingriffspunkte beschrieben, die verstellt werden müssen, um dies zu erreichen. Die genaue Auslegung der Parameter wird üblicherweise in Versuchsreihen und Tests empirisch ermittelt.

Vorteilhaft ist, wenn die Stellgröße (z.B. Lenkmoment) des LKS im Falle des Fahrereingriffs nicht weiter erhöht wird, so dass der Fahrer in seiner Lenkfreiheit nicht beeinträchtigt wird. Vorteilhaft ist weiterhin die Aufteilung des Ablaufs in mehrere Phasen, wobei aus dem normalen Regelbetrieb (ohne Fahrereingriff) heraus durch einen Fahrereingriff (Lenkeingriff) der Übergang in eine erste Phase stattfindet, indem eine spezielle Regelung stattfindet, wie sie beispielsweise in dieser Erfindung beschrieben ist.

Es ist erfindungsunerheblich, wie der Lenkeingriff des Fahrers detektiert wird, dies kann beispielsweise dadurch geschehen, dass ein Drehmoment, das der Fahrer ausübt, an der Lenksäule detektiert wird. Im Speziellen kann ein Vergleich zwischen dem Stellmoment des Stellers des LKS-Systems und dem Ist-Moment auf der Lenksäule gemessen werden.

Übersteigt dieses Fahrerlenkmoment einen bestimmten Wert, so gilt der Lenkeingriff als erkannt und der Übergang in Phase 1 kann stattfinden. Das Ende der Phase 1 ist durch das Ende des Lenkeingriffs gekennzeichnet und kann ebenfalls durch das Unterschreiten eines Lenkmoments (gegebenenfalls auch eines anderen Wertes als beim Übergang in Phase 1) durchgeführt werden. Phase 2 dient dazu, die Regelgrößen derart zurückzuführen, dass wieder in den normalen Regelbetrieb zurückgewechselt werden kann und hierbei trotzdem ein stetiger Reglerübergang möglich ist. Dies dient einer kontrollierten Überführung zurück zum normalen Regelverhalten ohne möglicherweise unangenehme Einschwingvorgänge.

Vorteilhafter Weise wird zwischen dem Übergang von Phase 1 auf Phase 2 eine bestimmte Zeit gewartet, um zu prüfen, ob der Fahrereingriff wirklich beendet ist oder das Unterschreiten einer Kenngröße wie des beschriebenen Lenkmoments nur temporärer Natur ist, beispielsweise wenn der Fahrer einen Richtungswechsel lenkt und dabei kurzzeitig das Lenkmoment verschwindet. Wie lang diese Zeitspanne ist, wird üblicherweise über Parameter eingestellt und kann statisch sein oder von Umgebungs- oder anderen Kenngrößen abhängen.

Vorteilhafter Weise bietet sich die Berechnung eines Gütemaßes an, um quantitativ zu erfassen, wie groß die Regeldifferenz zwischen dem Normalbetrieb und dem Zeitpunkt des Übergangs von Phase 1 auf Phase 2 ist. Dadurch kann der Grad der Erreichung des Regelziels (z. B. Regelabweichung = 0) angezeigt werden.

Vorteilhafter Weise bietet dieses Gütemaß die Möglichkeit, ab Unterschreiten eines bestimmten Schwellwerts, d. h. einer nicht mehr kritischen Regelabweichung den Übergang zum Normalbetrieb wieder herzustellen. Dies ist im Idealfall für den Fahrer so angenehm, dass er den Wechsel des Regelverhaltens gar nicht bemerkt.

Vorteilhafter Weise bietet sich im Verlauf von Phase 2 eine kontinuierliche Änderung des Regelparametersatzes an, um ein stetiges Regelverhalten beim Übergang der Phasen 1 auf 2 und Phase 2 auf Normalbetrieb zu erreichen.

Vorteilhafter Weise wird sofort beim Eintritt in die Phase 1 das aktuelle Eingriffsmoment des LKS-Systems sowie die vorliegende Regeldifferenz gespeichert. Wie bereits beschrieben, können diese Werte als Begrenzung während der Phase 1 dienen, um nicht verstärkt gegen den Fahrerwunsch zu lenken und des Weiteren als Grundlage für die Berechnung des Gütemaßes zu dienen. Erfindungsgemäß gilt dies auch für andere Regelparameter, die für das genannte Verfahren in Betracht kommen.

Vorteilhafter Weise werden beim Eintritt in die Phase 1 der I- und/oder der D-Anteil des üblicherweise verwendeten PID-Reglers auf 0 gesetzt, um ein Überschwingen oder undefinierte Betriebszustände zu vermeiden, die dann entstehen können, wenn gleichzeitig der Fahrer eingreift, bzw. die I- und D-Regelung nach Beendigung des Verfahrens wieder aktiviert wird.

Vorteilhafter Weise findet zur Erzeugung eines angenehmen Lenkgefühls in Phase 1 ein Übergang von einem linearen in einen nichtlinearen Regelbetrieb statt. Durch die Nichtlinearisierung des Regelverhaltens kann beispielsweise erreicht werden, dass der Fahrer ein Gefühl bekommt, er würde in einem merklichen Maße selbständig lenken.

Vorteilhafter Weise findet der Übergang vom linearen zum nichtlinearen Regelbetrieb dann statt, wenn die Regelabweichung um einen bestimmten Faktor höher ist als die Regelabweichung zu Beginn der Phase 1. Hierdurch wird erreicht, dass erst ab einer bestimmten Stärke des Lenkeingriffs kombiniert mit einem bestimmten Grad der Konsequenz des Lenkeingriffs, also einer bestimmten Änderung der Abweichung von der Sollkrümmung (Erhöhung der Krümmungsdifferenz) das Fahrverhalten adaptiert wird und der Fahrer eine gewisse Selbständigkeit spürt. Bei kleinen bzw. im Wesentlichen konsequenzlosen Fahrerlenkeingriffen kann auf diesen Schritt verzichtet werden und im linearen Regelbetrieb weiter geregelt werden.

Vorteilhafter Weise bietet sich zur mathematischen Beschreibung des nichtlinearen Reglers eine Polynomfunktion an, da diese den Vorteil hat, dass sie einfach beschreibbar ist. Üblicherweise wird im Versuch ermittelt, welche Funktion hierfür am geeignetsten ist. Es hat sich herausgestellt, dass im einfachsten Fall eine Parabelfunktion hierfür ausreichend ist.

Vorteilhafter Weise sieht der nichtlineare Regler einen Totbereich vor, so dass kleine Regelabweichungen nicht zu einem Stelleingriff führen.

Vorteilhafter Weise wird durch den Lenkeingriff des Fahrers die Steigung der Regelkennlinie verringert, was zu einem weniger ausgeprägten Regeleingriff und damit angenehmeren Fahrgefühl führt. Dieser Verfahrensbestandteil wird in Phase 1 angewendet.

Begriffserläuterungen

Der Regel-/Reglerbetrieb bezeichnet das Verfahren, insbesondere das mathematische Vorgehen zur Realisierung eines LKS-Systems, wie es z. B. im Stand der Technik beschrieben ist. Dieses System regelt üblicherweise im hier genannten Normalbetrieb, abgegrenzt von der erfindungsgemäßen Erweiterung im Falle eines Fahrereingriffs, wie er in den Phasen 1 und 2 der Erfindung beschrieben ist. Die dem Regelungssystem zu Grunde liegenden physikalischen Größen können unterschiedlicher Natur sein; insbesondere werden aber die Größen des Stellmoments, also des Drehmoments an der Lenksäule, sowie der Lenkwinkel verwendet werden. Das erfindungsgemäße Verfahren ist jedoch genauso auf andere Größen anwendbar.

Ausgehend von einer Krümmungsdifferenz zwischen der Soll-Trajektorie, die das LKS vorgibt und der Ist-Trajektorie die das Fahrzeug fährt, die das LKS-System auszuregeln versucht, kann ein Fahrerlenkeingriff zu einem Mitlenken führen, was dann der Fall ist, wenn der Lenkeingriff in der Richtung stattfindet, dass es dient, die Krümmungsdifferenz zu verringern. Im Gegensatz dazu wird mit Gegenlenken bezeichnet, wenn der Lenkeingriff danach trachtet, die Krümmungsdifferenz zu erhöhen.

Der Begriff des angenehmen Lenkgefühls lässt sich nicht exakt definieren, sondem wird üblicherweise in Versuchen und Testfahrten empirisch ermittelt, und die Parameter der technischen Systeme dementsprechend angepasst. Dies wirkt sich z.B. so aus, dass das System auf den Lenkeingriff des Fahrers nicht mit starkem Gegenlenken reagiert. Weitere Kriterien für ein angenehmes Lenkgefühl sind beispielsweise ein direktes Ansprechverhalten, d. h. eine adäquate Reaktion des Fahrzeugs auf eine Lenkbewegung, Lenkwiderstände, die den Anschein erwecken, als würden sie aufgrund topografischer oder fahrdynamischer Gegebenheiten vorhanden sein, weiche Übergänge, falls sich das Ansprechverhalten aufgrund von Systemeinflüssen ändert, und andere Kriterien, die Freiraum für eigene Lenkbewegungen geben.

Ausführungsformen der Erfindung

Ausführungsbeispiele der Erfindung sind in den Zeichnungen dargestellt und in der nachfolgenden Beschreibung näher erläutert.

Es zeigen:

Figur 1    die Darstellung eines Lenkverlaufs mit Fahrereingriff,

Figur 2    ein Zustandsdiagramm des erfindungsgemäßen Systems,

Figur 3    ein Regelkennliniendiagramm,

Figur 4    Reglerschaltbild für die Parameteradaption,

Figur 5    Übergang der Parametersätze.

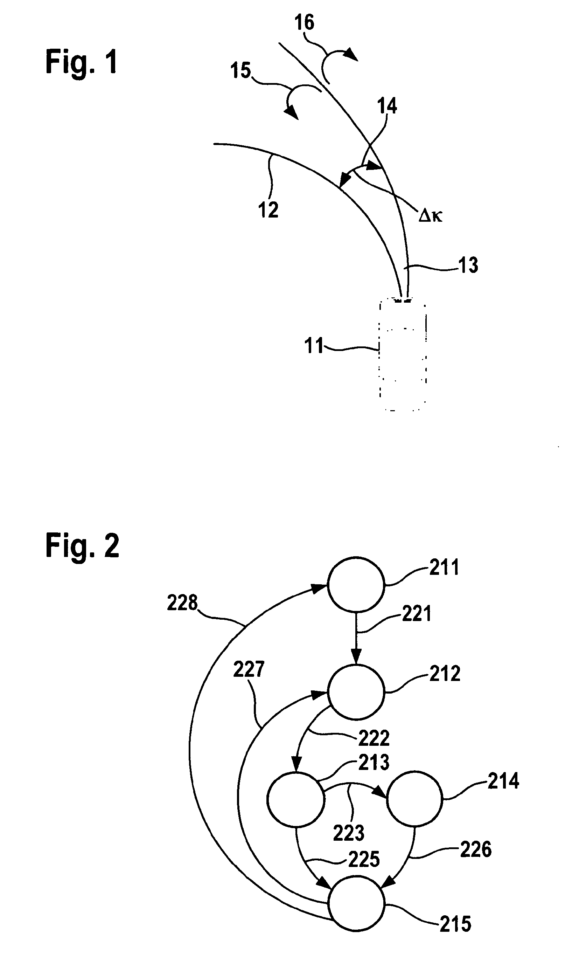

In Figur 1 ist der mögliche Fahr- bzw. Lenkverlauf eines Fahrzeugs 11 dargestellt Das LKS-System berechnet eine Soll-Trajektorie 12, während sich das Fahrzeug auf eine Ist-Trajektorie 13 bewegt. Jede Trajektorie besitzt eine Krümmung, aus denen der Wert der Krümmungsdifferenz 14 bestimmt werden kann. Diese Darstellung ist schematisch zu betrachten und wird in den seltensten Fällen dem tatsächlichen Fahrverlauf entsprechen, da sich die Regelparameter des LKS-Systems fortwährend ändern. Sinnvoller Weise betrachtet man die Figur als Momentanparametersatz zu einem bestimmten Zeitpunkt, auf Basis derer das LKS-System bzw. das erfindungsgemäße Verfahren agieren werden. Führt nun also die aktuelle Ist-Trajektorie 13 zu einer durch das LKS-System auszuregelnden Regeldifferenz 14, so ist zu unterscheiden zwischen zwei möglichen Fällen von Fahrereingriffen währenddessen: Das Mitlenken 15 des Fahrers verursacht eine zusätzliche Lenkbewegung in Richtung auf das Regelziel, bzw. in Richtung auf die Solltrajektorie 12, während ein Gegenlenken 16 des Fahrers der Absicht des LKS-Systems entgegenläuft.

In Figur 2 ist der Zustandsautomat des erfindungsgemäßen Systems dargestellt. Ausgehend von dem Normalbetrieb 211 wird die Phase 1 dann initiiert 212, wenn ein Lenkeingriff 221 stattfindet. Dieser kann beispielsweise dann vorliegen, wenn ein Lenkmoment auf die Lenksäule wirkt, welches nicht ausschließlich vom LKS-System herrührt und damit dem Fahrer zuzuordnen ist, wobei dieses einen gewissen Schwellwert überschreitet. Im Zwischenzustand 212 findet der Übergang in Phase 1 statt, welcher dadurch gekennzeichnet ist, dass die integralen und/oder differenzialen Reglerbestandteile D und I = 0 gesetzt und das aktuelle Lenkmoment des LKS-Systems und die Regeldifferenz zwischengespeichert werden. Unmittelbar darauf findet bedingungslos der Übergang 222 zum linearen Regelbetrieb 213 in Phase 1 statt. Gegebenenfalls erweist es sich als sinnvoll, nur noch den P-Regler laufen zu lassen; der beispielsweise durch folgende lineare Funktion beschrieben werden kann:

$$M_P = \frac{K_P(v, \Delta\kappa) * \Delta\kappa}{N}$$

Die erfindungsgemäße Nichtlinearregelung 214 in Phase 1 ist hingegen durch folgende Formel beschrieben:

$$M_{LKS} = \frac{K_p(v, \Delta\kappa) * a * \Delta\kappa^g}{N}$$

mit g > 1

N = Lenkgetrtebeübersetzung Reglers      $K_P(v,\Delta\kappa)$ = Verstärkung des linearen proportional

$M_{LKS}$ = Eingriffslenkmoment      $\Delta\kappa$ = Regelabweichung

a = Parabelkoeffizient      g = Exponent (ab g > 1 nichtlinear)

Im Falle der Wahl einer Parabelfunktion, d. h. g = 2, kann der Parabelfaktor a mit folgender Formel berechnet werden:

$$a = \frac{|\dot{M}_0| * N}{\Delta \kappa_0 * (f * \Delta \kappa)^g}$$

Der Übergang 223 vom linearen 213 auf den nichtlinearen 214 Regelbetrieb findet dann statt, wenn die Regelabweichung sich um einen gewissen Faktor (Verschiebefaktor) gegenüber der Regelabweichung zu Beginn des Fahrereingriffs ($\Delta\kappa_0$) erhöht entsprechend folgender Formel:

$$|\Delta\kappa| \geq |f * \Delta\kappa_0|$$

$f$ = Verschiebefaktor

$\Delta\kappa_0$ = Kurvenkrümmungsdifferenz bzw. Regelabweichung zum Zeitpunkt des Fahrereingriffs.

Der Verschiebefaktor ist ein zu applizierender Parameter, der das LKS-Eingriffsgefühl bestimmt und üblicherweise empirisch ermittelt wird. Wird die Schwelle $|f*\Delta\kappa_0|$ einmal überschritten, so arbeitet das System nur noch mit der nichtlinearen Formel. Beendet der Fahrer seinen Lenkeingriff und nimmt ihn innerhalb einer bestimmten Zeitspanne nicht wieder auf (als sinnvoll erwiesen haben sich hier 0,6 sek.), so findet der Zustandsübergang 225 bzw. 226 zum Zustand der Rückregelung (Phase 2) statt. Erfindungsgemäß wird zur Rückregelung ein Gütemaß verwendet, welches wie folgt definiert ist: $Q = \frac{1}{n}\sum_{i=0}^{n}|\Delta\kappa_{k-i}|$   k = Nummer aktueller Zeitschritt n = 1 ..... $\infty$

Alternativ sind auch andere Definitionen des Gütemaß möglich, wie z. B.

$$Q = \sum_{i=0}^{n}(\Delta\kappa_{k-i})^2 \qquad\qquad n = 1 \;....\; \infty$$

$$Q = \sum_{i=0}^{n}\Delta\kappa_{k-i} \qquad\qquad n = 1 \;....\; \infty$$

Die Phase der Rückregelung 215 ist dann beendet, wenn das Gütemaß unter einen bestimmten Schwellwert fällt, der ebenso appliziert bzw. empirisch ermittelt wird. Dann erfolgt ein Zustandsübergang 228 hin zum normalen LKS-Regelbetrieb 211. Sollte während der Rückregelung 215 wiederholt ein Fahrer lenkeingriff stattfinden, so findet ein Übergang 227 zurück in Phase 1, 212 statt.

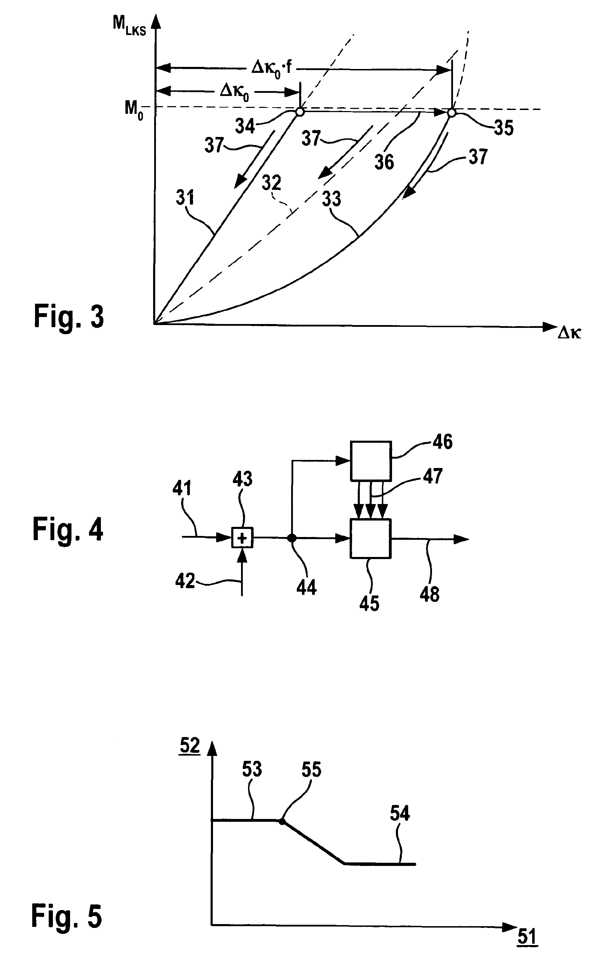

In Figur 3 ist ein Regelkennliniendiagramm dargestellt. In Abhängigkeit von der Krümmungsdifferenz ($\Delta\kappa$) mit dem sich ergebenden Lenkeingriff des LKS-Systems ($M_{LKS}$). Zum Zeitpunkt des Lenkeingriffs befindet sich das System in einem Arbeitspunkt 34 mit einem Lenkmoment des Systems ($M_0$) und einer Krümmungsdifferenz ($\Delta\kappa_0$). Zu diesem Zeitpunkt wird eine lineare Kennlinie 31 verwendet. Im Falle des Mitlenken des Fahrers 37 bewegt sich der Arbeitspunkt auf dieser Kennlinie Richtung Ursprung, im Falle des Gegenlenkens würde sich der Arbeitspunkt in die andere Richtung bewegen. Dies ist aber durch die Deckelung bzw. Begrenzung des Lenkeingriffsmoments des LKS-Systems unterbunden, so dass sich in diesem Fall der Arbeitspunkt an der Begrenzung auf der Linie 36, d. h. eine steigende Krümmungsdifferenz, bewegt. Die lineare Kennlinie wird entsprechend der Position des Arbeitspunktes angepasst, so dass auch ein Zeitpunkt existieren könnte, auf dem die Kennlinie 32 zur Anwendung kommen könnte. Der erfindungsgemäße Gedanke besteht nun insbesondere darin, ab einer bestimmten Verschiebung, die durch die Gewichtung eines Verschiebefaktors ($f$) mit der Regeldifferenz zum Zeitpunkt des Fahrereingriffs ($\Delta\kappa_0$) die Kennlinienform in eine nicht lineare Kennlinie zu überführen. Dies würde der Zeichnung nach entsprechend der Fall sein, wenn der Arbeitspunkt den Punkt 35 erreicht. Ab diesem wird der Regelbetrieb entsprechend der Kennlinie 33 durchgeführt. Ein Mitlenken des Fahrers 37 vom Arbeitspunkt 35 aus bewirkt nun durch die steilere Kennlinie an diesem Punkt ein stärkeres Nachlassen des durch das LKS-System eingebrachten Lenksystems, so dass der Fahrer seine Lenkbewegung auch selbständig kraftvoll durchführen kann und dadurch das Gefühl bekommt, die Kurve selber zu lenken.

In Figur 4 ist die Parameteradaption der Rückregelung in Phase 2, 215 als Blockschaltbild dargestellt. Die Ist-Krümmung 42 wird von der Soll-Krümmung 41 subtrahiert, 43, und ergibt somit die Regelabweichung 44, die in den Regler 45 sowie in den Parameteradaptor 46 eingeht. Im Parameteradaptor 46 werden abhängig vom Gütemaß und gegebenenfalls weiterer Kenngrößen die Parameter 47 für den Regler 45 bestimmt, so dass dieser eine entsprechende Stellgröße 48 bereitstellen kann.

Ein weiteres wichtiges Merkmal der Erfindung ist das Zurückführen des Fahrzeuges nach dem Fahrereingriff. Nach der Erkennung des Endes eines Fahrereingriffes liegt die Regelabweichung typisch auf einem undefinierten Wert. Über die Teilselektion einzelner Regelzweige kann ein sanftes Zurückführen des Fahrzeuges auf die Sollgröße d.h. zur Regelabweichung 0 durchgeführt werden. Es kann z.B. nur der Proportionalanteil und der Differenzialanteil genutzt werden und zu einem späteren Zeitpunkt der Integralanteil zugeschaltet werden. Hier können alle Kombinationen genutzt werden. Eine weitere Möglichkeit ist die Nutzung mehrere Reglerparametersätze, welche abhängig von der Regeldifferenz selektiert werden.

Liegt eine sehr große Abweichung zwischen Fahrzeugsolltrajektorie und Fahrzeugisttrajektorie vor, so wird mit einem Reglerparametersatz gearbeitet, der zu moderaten Momenteneingriffen führt. Reduziert sich diese Abweichung so kann ein Reglerparametersatz benutzt werden, der bei kleineren Abweichungen zu stärkeren Eingriffen führt. Durch den kontinuierlichen Übergang der Reglerparametersätze wird ein stetiges Regelverhalten erreicht.

In Figur 5 ist der Übergang der Parametersätze veranschaulicht und von der Regelabweichung 51, beispielsweise der Krümmungsdifferenz $\Delta\kappa$ bezogen auf die Parameter 52 (alternativ Parametersatz, Parametervektor) aufgetragen. Ausgehend von dem Übergang 225 oder 226 in den Zustand der Rückregelung 215 beginnend mit einem Parametersatz 54 wird dieser bei Verringerung der Regelabweichung so weit adaptiert, bis er im Übergangspunkt 55 mit einem Parametersatz von 53 die Phase 2 beendet wird und ein Übergang in den Normalbetrieb stattfinden kann. Der Übergang 55 findet, wie beschrieben, statt, wenn das Gütemaß eine bestimmte Schwelle unterschreitet, 228.

**Patentansprüche**

1.  Verfahren zum Betrieb eines Lane Keeping Support Systems (LKS),

    - zur Erzeugung eines angenehmen Lenkgefühls,
    - wobei ein normaler Regelbetrieb (211) stattfindet, falls kein Fahrereingriff (221) vorliegt,
    - **und** der Regelbetrieb umgeschaltet (212) wird, wenn der Fahrer einen Lenkeingriff (221) vornimmt,
    - indem die Regelparameter verändert werden,
    - ohne die Regelung (45) und/oder eine Rückkopplung (42) zu deaktivieren,
    - wobei das angenehme Lenkgefühl durch einen kontinuierlichen Übergang der Reglerparametersätze und ein stetiges Regelverhalten erreicht wird
    - und die Stellgröße das Lenkmoment des LKS ist,
    **dadurch gekennzeichnet, dass**
    - der Regelbetrieb bei dem Fahrereingriff in eine erste Phase eintritt (213) und beim Beenden des Fahrereingriffs in eine zweite Phase (215), bevor wieder in den normalen Regelbetrieb (211) gewechselt wird,
    - wobei die zweite Phase (215) dazu dient, die Regelgrößen wieder in den normalen Regelbetrieb (211) überzuführen,
    - wobei die Regeldifferenz zwischen Normalbetrieb und der ersten und der zweiten Phase (213, 215) durch ein Gütemaß quantifiziert wird
    - und die zweite Phase (215) beendet wird, wenn das Gütemaß einen bestimmten Schwellwert unterschreitet.

2.  Verfahren nach Anspruch 1, **dadurch gekennzeichnet, dass**

    - das Lenkmoment ($M_0$) des LKS für die Dauer des Lenkeingriffs nicht erhöht wird.

3.  Verfahren nach Anspruch **1 oder 2, dadurch gekennzeichnet, dass**

    - der Übergang (212) in die erste Phase (213) und von der ersten Phase (213) auf die zweite Phase (215) **dadurch gekennzeichnet ist, dass** ein bestimmtes Lenkradmoment, welches vom Fahrer initiiert wird, über- bzw. unterschritten wird.

4.  Verfahren nach **einem der vorigen Ansprüche, dadurch gekennzeichnet, dass**

    - der Übergang auf die zweite Phase (215) mindestens eine festgesetzte Zeitspanne lang dauert.

5. Verfahren nach einem der vorigen Ansprüche, **dadurch gekennzeichnet, dass** der Reglerparametersatz (52) während der zweiten Phase (215) kontinuierlich geändert wird.

6. Verfahren nach einem der vorigen Ansprüche, **dadurch gekennzeichnet, dass** beim Eintritt in die erste Phase (213) das aktuelle Eingriffsmoment und/oder die Regeldifferenz gespeichert wird.

7. Verfahren nach einem der vorigen Ansprüche, **dadurch gekennzeichnet, dass** beim Eintritt in die erste Phase (213) der Integral und/oder der Differenzial-Regelanteil auf Null gesetzt wird.

8. Verfahren nach einem der vorigen Ansprüche, **dadurch gekennzeichnet, dass**

   - eine Umschaltung (223) von einer linearen (213) auf eine nichtlineare (214) Regelbetrieb stattfindet.

9. Verfahren nach Anspruch **8, dadurch gekennzeichnet, dass**

   - der Übergang vom linearen (31, 32) zum nichtlinearen Regelbetrieb (33) stattfindet, wenn eine Vergrößerung der Regelabweichung gegenüber der Regelabweichung bei Beginn des Fahrereingriffs mit einem Faktor gewichtet (34, 35), eintritt.

10. Verfahren nach einem der vorigen Ansprüche, **dadurch gekennzeichnet, dass** der nichtlineare Regler durch eine Polynomfunktion n-ten Grades (insbes. einer Parabelfunktion) (33) beschreibbar ist.

11. Verfahren nach Anspruch **8, 9, oder 10, dadurch gekennzeichnet, dass** der nichtlineare Regler einen Totbereich aufweist, so dass für kleine Regelabweichungen kein Stelleingriff erfolgt.

12. Verfahren nach einem der vorigen Ansprüche, **dadurch gekennzeichnet, dass** die Steigung der Regelkennlinie (31) durch den Fahrereingriff (36) verringert wird.

13. Vorrichtung zum Betrieb eines Lane Keeping Support Systems (LKS),

   - zur Erzeugung eines angenehmen Lenkgefühls,
   - wobei ein Regler im normalen Regelbetrieb (211) arbeitet, falls kein Fahrereingriff (221) vorliegt,
   - und der Regler umgeschaltet wird (221), wenn der Fahrer einen Lenkeingriff vornimmt,
   - indem die Regelparameter adaptiert werden,
   - ohne dass der Regler oder die Rückkopplung deaktiviert wird
   - wobei das angenehme Lenkgefühl durch einen kontinuierlichen Übergang der Reglerparametersätze und ein stetiges Regelverhalten erreicht wird
   - und die Stellgröße das Lenkmoment des LKS ist,
   **dadurch gekennzeichnet, dass**
   - der Regelbetrieb bei dem Fahrereingriff in eine erste Phase eintritt (213) und beim Beenden des Fahrereingriffs in eine zweite Phase (215), bevor wieder in den normalen Regelbetrieb (211) gewechselt wird,
   - wobei die zweite Phase (215) dazu dient, die Regelgrößen wieder in den normalen Regelbetrieb (211) überzuführen,
   - wobei die Regeldifferenz zwischen Normalbetrieb und der ersten und der zweiten Phase (213, 215) durch ein Gütemaß quantifiziert wird


**Claims**

1. Method for operating a lane-keeping support system (LKS)

   - for generating a comfortable steering sensation,
   - with a normal control mode (211) taking place if there is no driver intervention (221),
   - and the control mode being changed over (212) when the driver performs a steering intervention (221),
   - by the control parameters being changed,
   - without deactivating the control system (45) and/or a feedback system (42),
   - with the comfortable steering sensation being achieved by a continuous transition of the sets of controller parameters and a continuous control behaviour,

- and the control variable being the steering torque of the lane-keeping support system,
**characterized in that**
- the control mode enters a first phase (213) in the event of the driver intervention and a second phase (215) when the driver intervention ends, before being changed back to the normal control mode (211),
- with the second phase (215) serving to change over the control variables back to the normal control mode (211),
- with the control difference between the normal mode and the first and the second phase (213, 215) being quantified by a quality measure,
- and the second phase (215) being terminated when the quality measure falls below a specific threshold value.

2. Method according to Claim 1, **characterized in that**

- the steering torque ($M_0$) of the lane-keeping support system is not increased for the duration of the steering intervention.

3. Method according to Claim 1 or 2, **characterized in that**

- the transition (212) to the first phase (213) and from the first phase (213) to the second phase (215) is **characterized in that** a specific steering wheel torque which is initiated by the driver is exceeded or undershot.

4. Method according to one of the preceding claims, **characterized in that**

- the transition to the second phase (215) lasts for at least a fixed period of time.

5. Method according to one of the preceding claims, **characterized in that** the set (52) of controller parameters is continuously changed during the second phase (215).

6. Method according to one of the preceding claims, **characterized in that** the actual intervention torque and/or the control difference are/is stored when the first phase (213) is entered.

7. Method according to one of the preceding claims, **characterized in that** the integral and/or the differential control component are/is set to zero when the first phase (213) is entered.

8. Method according to one of the preceding claims, **characterized in that**

- a changeover (223) from a linear (213) to a non-linear (214) control mode takes place.

9. Method according to Claim 8, **characterized in that**

- the transition from the linear (31, 32) to the non-linear control mode (33) takes place when there is an increase, which is weighted (34, 35) with a factor, in the magnitude of the control deviation relative to the control deviation at the beginning of the driver intervention.

10. Method according to one of the preceding claims, **characterized in that** the non-linear controller can be described by a polynomial function of the n-th degree (in particular a parabolic function) (33).

11. Method according to Claim 8, 9 or 10, **characterized in that** the non-linear controller has a dead region, and therefore no actuating intervention is executed for small control deviations.

12. Method according to one of the preceding claims, **characterized in that** the gradient of the control characteristic curve (31) is reduced by the driver intervention (36).

13. Apparatus for operating a lane-keeping support system (LKS)

- for generating a comfortable steering sensation,
- with a controller operating in the normal control mode (211) if there is no driver intervention (221),
- and the controller being changed over (212) when the driver performs a steering intervention,
- by the control parameters being adapted,
- without the controller or the feedback system being deactivated,

- with the comfortable steering sensation being achieved by a continuous transition of the sets of controller parameters and a continuous control behaviour,
- and the control variable being the steering torque of the lane-keeping support system,
**characterized in that**
- the control mode enters a first phase (213) in the event of the driver intervention and a second phase (215) when the driver intervention ends, before being changed back to the normal control mode (211),
- with the second phase (215) serving to change over the control variables back to the normal control mode (211),
- with the control difference between the normal mode and the first and the second phase (213, 215) being quantified by a quality measure.

**Revendications**

1. Procédé de conduite d'un système d'assistance au maintien sur une bande de circulation ("lane keeping support" - LKS),

   - en vue d'obtenir une sensation agréable de conduite,
   - dans lequel le fonctionnement de régulation (211) est normal en cas d'absence d'intervention (221) par le conducteur,
   - le fonctionnement de régulation étant commuté (212) lorsque le conducteur entreprend une intervention de braquage (221),
   - en modifiant les paramètres de régulation,
   - sans désactiver la régulation (45) et/ou une rétroaction (42),
   - la sensation agréable de conduite étant obtenue par une transition continue des jeux de paramètres du régulateur et un comportement de régulation constant,
   - la grandeur de réglage étant le couple de braquage du LKS,
   **caractérisé en ce que**
   - le fonctionnement de régulation entre dans une première phase (213) en cas d'intervention du conducteur et dans une deuxième phase (215) lors de la fin de l'intervention du conducteur, avant de revenir dans le fonctionnement normal de régulation (211),
   - **en ce que** la deuxième phase (215) sert à ramener les grandeurs de régulation en fonctionnement de régulation normal (211),
   - **en ce que** la différence de régulation entre le fonctionnement normal et la première et la deuxième phase (213, 215) est quantifié par une mesure de qualité et
   - **en ce qu'**il est mis fin à la deuxième phase (215) lorsque la mesure de qualité n'atteint plus une valeur de seuil définie.

2. Procédé selon la revendication 1, **caractérisé en ce que** le couple de braquage ($M_0$) du LKS n'est pas augmenté pendant la durée de l'intervention de braquage.

3. Procédé selon les revendications 1 ou 2, **caractérisé en ce que** la transition (212) vers la première phase (213) et de la première phase (213) à la deuxième phase (215) est **caractérisée en ce qu'**un couple défini lancé par le conducteur sur les roues motrices est dépassé ou n'est pas atteint.

4. Procédé selon l'une des revendications précédentes, **caractérisé en ce que** la transition vers la deuxième phase (215) se maintient pendant au moins un laps de temps imposé.

5. Procédé selon l'une des revendications précédentes, **caractérisé en ce que** le jeu (52) de paramètres du régulateur est modifié de manière continue pendant la deuxième phase (215).

6. Procédé selon l'une des revendications précédentes, **caractérisé en ce que** lors de l'entrée dans la première phase (213), le couple effectif d'intervention et/ou la différence de régulation sont conservés en mémoire.

7. Procédé selon l'une des revendications précédentes, **caractérisé en ce que** lors de l'entrée dans la première phase (213), la partie intégrale et/ou différentielle de la régulation est fixée à zéro.

8. Procédé selon l'une des revendications précédentes, **caractérisé en ce qu'**une commutation (223) a lieu d'un fonctionnement linéaire (213) à un fonctionnement non linéaire (214) de la régulation.

9. Procédé selon la revendication 8, **caractérisé en ce que** la transition entre le fonctionnement linéaire (31, 32) et le fonctionnement non linéaire (33) de la régulation a lieu lorsqu'une augmentation, pondérée (34, 35) par un facteur, de la différence de régulation a lieu par rapport à la différence de régulation au début de l'intervention du conducteur.

10. Procédé selon l'une des revendications précédentes, **caractérisé en ce que** le régulateur non linéaire peut être décrit par une fonction polynomiale de degré n (en particulier une fonction parabolique) (33).

11. Procédé selon les revendications 8, 9 ou 10, **caractérisé en ce que** le régulateur non linéaire présente une plage inactive dans laquelle aucune intervention de réglage n'a lieu pour de petits écarts de réglage.

12. Procédé selon l'une des revendications précédentes, **caractérisé en ce que** la pente de la ligne caractéristique de régulation (31) est diminuée par l'intervention (36) du conducteur.

13. Dispositif de conduite d'un système d'assistance au maintien sur une bande de circulation ("lane keeping support" - LKS),

     - en vue d'obtenir une sensation agréable de conduite,
     - dans un régulateur fonctionne en régulation normale (211) en cas d'absence d'intervention (221) par le conducteur,
     - le régulateur étant commuté (212) lorsque le conducteur entreprend une intervention de braquage (221),
     - en modifiant les paramètres de régulation,
     - sans désactiver le régulateur ni la rétroaction,
     - la sensation agréable de conduite étant obtenue par une transition continue des jeux de paramètres du régulateur et un comportement de régulation constant,
     - la grandeur de réglage étant le couple de braquage du LKS,
     **caractérisé en ce que**
     - le fonctionnement de régulation entre dans une première phase (213) en cas d'intervention du conducteur et dans une deuxième phase (215) lors de la fin de l'intervention du conducteur, avant de revenir dans le fonctionnement normal de régulation (211),
     - **en ce que** la deuxième phase (215) sert à ramener les grandeurs de régulation en fonctionnement de régulation normal (211) et
     - **en ce que** la différence de régulation entre le fonctionnement normal et la première et la deuxième phase (213, 215) est quantifiée par une mesure de qualité.

**Fig. 1**

**Fig. 2**

## Fig. 3

## Fig. 4

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004055064 A1
- DE 102005049071 A1